(19) Europäisches Patentamt
European Patent Office
Office européen des brevets

(11) **EP 4 718 384 A1**

(12) **EUROPEAN PATENT APPLICATION**
published in accordance with Art. 153(4) EPC

(43) Date of publication:
**01.04.2026 Bulletin 2026/14**

(21) Application number: **25789868.4**

(22) Date of filing: **14.04.2025**

(51) International Patent Classification (IPC):
**G06V 10/25** (2022.01)

(86) International application number:
**PCT/CN2025/088747**

(87) International publication number:
**WO 2025/218625 (23.10.2025 Gazette 2025/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **15.04.2024 CN 202410452568**

(71) Applicant: **Beijing Horizon Information Technology Co., Ltd.**
**Beijing 100094 (CN)**

(72) Inventor: **ZHOU, Zongwei**
**Beijing 100094 (CN)**

(74) Representative: **Müller-Boré & Partner**
**Patentanwälte PartG mbB**
**Friedenheimer Brücke 21**
**80639 München (DE)**

(54) **METHOD AND APPARATUS FOR IDENTIFYING TARGET OBJECT IN IMAGE, AND DEVICE AND MEDIUM**

(57) Embodiments of the present disclosure disclose a method, an apparatus, a device and a medium for identifying a target object in an image. The method comprises: performing spatial positional encoding on an initial position of the target object in the image, to obtain a plurality of first spatial positional codes; processing the plurality of first spatial positional codes, a plurality of query vectors corresponding to the plurality of first spatial positional codes, an image feature of the image, and a second positional code that matches the image feature, to obtain an appearance feature and a positional feature of the target object on the image; determining, based on the positional feature and the plurality of first spatial positional codes, a positional offset of the target object relative to the initial position; determining, based on the appearance feature, size information of the target object in the image; and determining, based on the initial position and the positional offset of the target object, a final position of the target object in the image. The embodiments of the present disclosure can realize decoupling of an appearance feature and a positional feature of a target object in an image, thereby realizing high-precision positioning for the target object in the image.

Perform spatial positional encoding on an initial position of the target object in the image, to obtain a plurality of first spatial positional codes ~S1

Process the plurality of first spatial positional codes, a plurality of query vectors corresponding to the plurality of first spatial positional codes, an image feature of the image, and a second positional code that matches the image feature, to obtain an appearance feature and a positional feature of the target object on the image ~S2

Determine, based on the positional feature and the plurality of first spatial positional codes, a positional offset of the target object relative to the initial position ~S3

Determine, based on the appearance feature, size information of the target object in the image ~S4

Determine, based on the initial position and the positional offset of the target object, a final position of the target object in the image ~S5

**Fig. 2**

**Description**

The present disclosure claims the priority to the CN patent application No. 202410452568.0, entitled "METHOD AND APPARATUS FOR IDENTIFYING TARGET OBJECT IN IMAGE, AND DEVICE AND MEDIUM" filed with the China National Intellectual Property Administration on April 15, 2024, the content of which is incorporated herein by reference in its entirety.

FIELD

The present disclosure relates to the computer vision technology, and more specifically, to a method, an apparatus, a device and a medium for identifying a target object in an image.

BACKGROUND

Due to the powerful global perception capabilities, attention networks are being applied increasingly widely in object detection tasks in computer vision.
In the event of training a target detection model using a convolutional neural network, if corresponding anchor points or anchor boxes are set based on a feature map, and then the anchor points or anchor boxes are assigned to different truth values according to preset rules, and then different constraints can be added, there are needs for a balanced distribution of positive and negative samples, and massive post-processing such as non-maximum suppression, and the like, which may result in a slow convergence speed for the object detection model.
In a model for detecting, based on an attention network, a target object in an image, if a plurality of learnable encoded vectors are used as templates, then the target to be detected can be obtained by querying the templates on the feature map, and template predications are matched with the truth value boxes one by one during training, so as to achieve a balance between positive and negative samples. In the case of a limited template coverage, the detection accuracy of a target object in an image will be reduced.

SUMMARY

Embodiments of the present disclosure provide a method, an apparatus, a device and a medium for identifying a target object in an image.
In some aspects of the embodiments of the present disclosure, there is provided a method of identifying a target object in an image, comprising:

    performing spatial positional encoding on an initial position of the target object in the image, to obtain a plurality of first spatial positional codes;

    processing the plurality of first spatial positional codes, a plurality of query vectors corresponding to the plurality of first spatial positional codes, an image feature of the image, and a second positional code that matches the image feature, to obtain an appearance feature and a positional feature of the target object on the image;

    determining, based on the positional feature and the plurality of first spatial positional codes, a positional offset of the target object relative to the initial position;

    determining, based on the appearance feature, size information of the target object in the image; and

    determining, based on the initial position and the positional offset of the target object, a final position of the target object in the image.

In some further aspects of the embodiments of the present disclosure, there is provided an apparatus for identifying a target object in an image, comprising:

    a spatial positional encoding module for performing spatial positional encoding on an initial position of the target object in the image, to obtain a plurality of first spatial positional codes;

    a first processing module for processing the plurality of first spatial positional codes, a plurality of query vectors corresponding to the plurality of first spatial positional codes, an image feature of the image, and a second positional code that matches the image feature, to obtain an appearance feature and a positional feature of the target object on the image;

    a positional offset determining module for determining, based on the positional feature and the plurality of first spatial positional codes, a positional offset of the target object relative to the initial position;

    a size information determining module for determining, based on the appearance feature, size information of the target object in the image; and

    a second processing module for determining, based on the initial position and the positional offset of the target object, a final position of the target object in the image.

In yet further aspects of the embodiments of the present disclosure, there is provided a computer readable storage medium storing a computer program thereon, wherein the computer program is used for performing the method for identifying a target object in an image as described above.
In still further aspects of the embodiments of the present disclosure, there is provided an electronic device, comprising:

a processor; and

a memory for storing executable instructions by the processor;

wherein the processor is used for reading the executable instructions from the memory, and executing the instructions to implement the method of identifying a target object in an image described above.

According to the method, the apparatus, the device and the medium provided by the embodiments of the present disclosure, as described above, after a plurality of first spatial positional codes are obtained by performing spatial positional encoding on an initial position of the target object in the image, the plurality of first spatial positional codes, a plurality of query vectors corresponding to the plurality of first spatial positional codes, an image feature of the image, and a second positional code that matches the image feature can be processed according to a preset attention mechanism, to obtain an appearance feature and a positional feature of the target object on the image, and thus a decoupling of the appearance feature and the positional feature can be achieved. As the appearance feature of the target object on the image can characterize the feature of the appearance size of the target object in the image, the size information of the target object in the image can be determined accurately based on the appearance feature of the target object on the image. Since the positional feature of the target object on the image can characterize the feature of the final spatial position of the target object on the image and the plurality of first spatial positional codes are obtained based on the initial positional codes of the target object on the image, a positional offset relative to the initial position of the target object can be obtained based on the positional feature of the target object on the image and the plurality of spatial positional codes, and the final position of the target object can be obtained in conjunction with the initial position of the target object, to precisely position the target object in the image.

Hereinafter, reference will be made to the drawings and embodiments to further detail the technical solution of the present disclosure.

BRIEF DESCRIPTION OF THE DRAWINGS

Fig. 1 illustrates a block diagram of a system applicable to some embodiments of the present disclosure;

Fig. 2 illustrates a flowchart of a method of identifying a target object in an image in some embodiments of the present disclosure;

Fig. 3 illustrates a flowchart of a step S2 in some embodiments of the present disclosure;

Fig. 4 illustrates a diagram of a working principle of the method of identifying a target object in an image in some examples of the present disclosure;

Fig. 5 illustrates a flowchart of a step S2-3 in some embodiments of the present disclosure;

Fig. 6 illustrates a diagram of a working principle of the method of identifying a target object in an image in some other examples of the present disclosure;

Fig. 7 illustrates a flowchart of a step S2-4 in some embodiments of the present disclosure;

Fig. 8 illustrates a flowchart of a step S2-2 in some embodiments of the present disclosure;

Fig. 9 illustrates a block diagram of a structure of an apparatus for identifying a target object in an image in some embodiments of the present disclosure;

Fig 10 illustrates a block diagram of a structure of a first processing module 200 in some embodiments of the present disclosure;

Fig. 11 illustrates a block diagram of a structure of a first processing module 200 in some other embodiments of the present disclosure;

Fig. 12 illustrates a block diagram of an apparatus for identifying a target object in an image in some other embodiments of the present disclosure; and

Fig. 13 illustrates a block diagram of a structure of an electronic device in some embodiments of the present disclosure.

DETAILED DESCRIPTION OF EMBODIMENTS

In order to make the present disclosure clear, reference below will be made to drawings to describe in detail example embodiments of the present disclosure. Apparently, the embodiments described herein are only a part of the embodiments of the present disclosure, not all of them. It is to be appreciated that the present disclosure is not limited to those example embodiments.

It is to be noted that: unless indicated clearly otherwise, the relative arrangement, numerical expressions, and numerical values of components and steps described in those embodiments do not limit the scope of the present disclosure.

Overview of present disclosure

In the process of formulating the present disclosure, the inventor has found at least the following problem when detecting a target object in an image using an attention network-based detection model: the attention network-based detection model typically comprises an encoder and a decoder, wherein the encoder performs deep encoding on an image feature using the attention network, and an input of the decoder is a plurality of learnable feature codes specified in advance. However, the attention mechanism typically does not have permutation invariance, and in order to enable the attention network in the detection model to be permutation-variable, and it is general to superimpose the spatial positional codes and the appearance feature of the target object in the image, causing the appearance feature and the positional feature of the target object in the image to be coupled together, and the superimposed features will greatly increase the difficulty of the bias regression task relative to the query position point, further resulting in a lower positioning accuracy of the target object in the image.

Example System

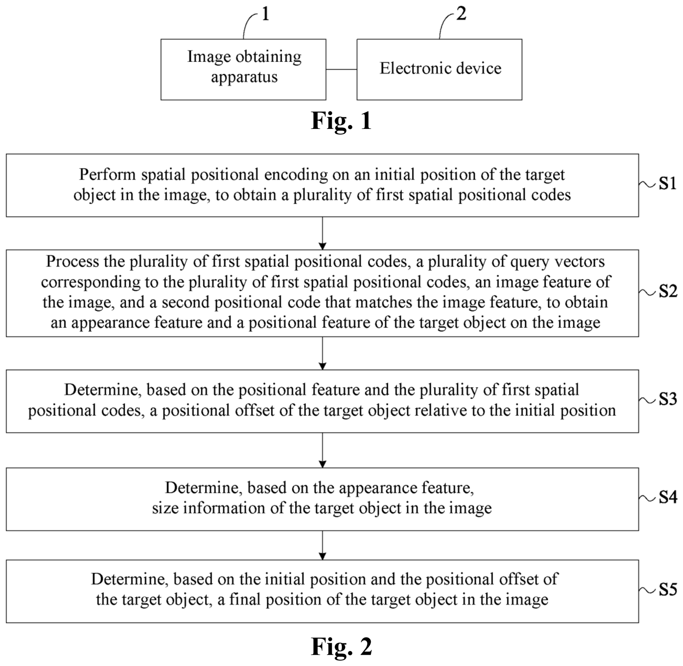

Fig. 1 illustrates a block diagram of a system applicable to some embodiments of the present disclosure. As shown therein, the system applicable to the embodiments of the present disclosure may comprise image obtaining apparatus 1 and an electronic device 2.
Wherein, the image obtaining apparatus 1 may comprise a camera for obtaining an image containing a target object. The image obtained by the camera may comprise a color image, or may comprise a black-and-white image. The target object may comprise an object to be identified or to undergo behavior analysis, such as a pedestrian, a vehicle, a cyclist or the like.
The electronic device 2 may comprise a fixed electronic device such as a desktop computer, a server or the like, or may comprise a mobile electronic device arranged on a mobile carrier such as a vehicle or the like.
The electronic device 2 may receive an image obtained by the image obtaining apparatus 1. The electronic device 2 may identify a target object in the image using a pre-trained first detection model, and preliminarily position the target object in the image, to obtain an initial position of the target object in the image. Wherein, the first detection model may be a neural network model trained based on sample images containing the target object, for example, a convolutional neural network model, a recurrent neural network, and the like.
The electronic device 2 may perform spatial positional encoding on an initial position of the target object in the image according to a preset spatial positional encoding rule, using a second detection model, to obtain a plurality of first spatial positional codes, and generate a plurality of query vectors required by the attention network based on the plurality of first spatial positional codes. Wherein, the second detection model is a detection model for identifying the target object in the image according to the embodiments of the present disclosure, for example, an attention network-based detection model. By using the second detection model, the electronic device 2 can extract the image feature of the image using a feature extraction network independent of the attention network, and perform spatial positional encoding based on the image feature of the image, to obtain a second positional code that matches the image feature. By using the second detection model, the electronic device 2 inputs the plurality of first spatial positional codes, the plurality of query vectors, the image feature of the image, and the second positional code into the attention network for processing, and the attention network outputs the appearance feature and the positional feature of the target object in the image, to decouple the appearance feature and the positional feature. By using the second detection model, the electronic device 2 can accurately determine size information of the target object in the image based on the appearance feature of the target object in the image. The second detection model can obtain, based on the positional feature of the target object in the image and the plurality of spatial positional codes, a positional offset relative to the initial position of the target object, and can obtain a final position of the target object in conjunction with the initial position of the target object, to precisely position the target object in the image.
It is to be noted that, when the electronic device 2 is set on a mobile carrier such as a vehicle or the like, precisely positioning of an adjacent target object in real time can be achieved by the mobile carrier, which is helpful for improving the collision prediction accuracy and achieving a reasonable trajectory plan in an autonomous driving mode.

Example Methods

Fig. 2 illustrates a schematic flowchart of a method of identifying a target object in an image in some embodiments of the present disclosure. As shown in Fig. 2, the method comprises the following steps;
S1: spatial positional encoding is performed on an initial position of the target object in the image, to obtain a plurality of first spatial positional codes.
In some optional embodiments, after the image obtaining apparatus obtains the image, a first processor within the electronic device may preliminarily position the target object in the image using a pre-trained first detection model, to obtain an initial position of the target object in the image.
It is to be noted that that, for an image feature of a sample image extracted by the first detection model, the appearance feature and the positional feature of the target object in the sample image are coupled to each other. Wherein, the appearance feature of the target object is an appearance observation feature of the target object. For example, if the target object comprises a human face, the appearance feature of the human face may comprise: a human-face key feature point position, key position distance information, an area proportion of each organ of the human face, a texture feature of the human face and the like. The positional feature of the target object is a feature corresponding to positional information (e.g., a spatial positional code) of the target object.

In some optional embodiments, after the initial position of the target object in the image is obtained, in order to guarantee that the attention mechanism has a permutation variability, the initial position of the target object is encoded according to a preset encoding rule, to obtain a plurality of spatial positional codes which are defined as a plurality of first spatial codes. In addition, a plurality of query vectors may be set for the attention mechanism. Wherein, the query vector is a vector for a query when detecting a target object in an image.

In an optional example, the step S1 may be executed by calling, by the processor, a corresponding instruction stored in the memory, or may be executed by a spatial positional encoding module run by the processor.

S2: the plurality of first spatial positional codes, a plurality of query vectors corresponding to the plurality of first spatial positional codes, an image feature of the image, and a second positional code that matches the image feature are processed to obtain an appearance feature and a positional feature of the target object on the image.

In some optional embodiments, a computer instruction corresponding to the second detection model may be executed by a second processor within the electronic device, and the computer instruction may perform attention mechanism-based processing on the plurality of first spatial positional codes, the plurality of query vectors corresponding to the plurality of first spatial positional codes, the image feature of the image, and the second positional code, to obtain an appearance feature and a positional feature of the target object on the image. Wherein, since the image feature of the image may be obtained through feature extraction performed for the image by a feature extraction network independent of the attention mechanism, the electronic device may generate an appearance feature and a positional feature which are decoupled when performing the attention mechanism-based processing using the second detection model.

In an optional example, the step S2 may be executed by calling, by the processor, a corresponding instruction stored in the memory, or may be executed by a first processing module run by the processor.

S3: a positional offset of the target object relative to the initial position is determined based on the positional feature and the plurality of first spatial positional codes.

In some optional embodiments, the positional offset of the target object relative to the initial position may be computed according to a preset position determining equation, and using the positional feature and the first spatial positional code as input parameters.

In some optional embodiments of the present disclosure, the positional offset of the target object relative to the initial position may be computed through the following equation:

$$Dxy = W_d(P' - P) + b$$

wherein, $Dxy$ represents a positional offset of the target object relative to the offset, $W_d$ represents a learnable first weight matrix, P' represents a positional feature, P represents a first spatial positional code, and b represents a learnable first deviation.

In some other optional examples of the present disclosure, the positional offset of the target object relative to the initial position may be computed through the following equation:

$$Dxy = W_e(P' - P)$$

wherein, $Dxy$ represents a positional offset of the target object relative to the initial position, and $W_e()$ represents a learnable function used for determining a positional offset and is related to a vector difference between the positional feature and the first spatial positional code.

In an optional example, the step S3 may be executed by calling, by the processor, a corresponding instruction stored in the memory, or may be determined by a positional offset determining module run by the processor.

S4: size information of the target object in the image is determined based on the appearance feature.

In some optional embodiments, size information of the target object in the image may be computed according to a preset size regression equation, and using the appearance feature as an input parameter.

In some optional examples of the present disclosure, the size information of the target object in the image may be computed through the following equation:

$$WH = W_s V' + b_s$$

wherein, $WH$ represents a size of the target object in the image, $W_S$ represents a learnable second weight matrix, V' represents an appearance feature, and $b_s$ represents a learnable second deviation.

In some other optional examples of the present disclosure, the size information of the target object in the image may be computed through the following equation:

$$WH = W_o(V')$$

wherein, $WH$ represents a size of the target object in the image, $W_o()$ represents a learnable function used for determining size information and is related to the appearance feature, and V' represents the appearance feature.

In an optional example, the step S4 may be executed by calling, by the processor, a corresponding instruction stored in the memory, or may be executed by a size information determining module run by the processor.

S5: a final position of the target object in the image is determined based on the initial position and the positional offset of the target object.

In some optional embodiments, a final position of the target object in the image may be obtained by adding the positional offset to the initial position of the target object.

It is to be noted that the electronic device in the embodiments of the present disclosure may comprise one or more processors, and by using the one or more processors, the electronic device may determine the final position of the target object in the image, and obtain the size information of the target object in the image.

In some optional embodiments, in a case where the electronic device comprises a processor, by using a first detection model, the processor may preliminarily position the initial position of the target object in the image to obtain the initial position of the target object in the image. By using a second detection model, the processor may determine size information of the target object in the image, and determine a positional offset of the target object relative to the initial position. The processor may also determine a final position of the target object based on the initial position of the target object in the image and the positional offset of the target object relative to the initial position.

In some optional embodiments, in a case where the electronic device comprises a plurality of processors, for example, a first processor, a second processor and a third processor, the first processor may preliminarily position the initial position of the target object in the image by using a first detection model, to obtain the initial position of the target object in the image. By using a second detection model, the second processor may determine size information of the target object in the image, and determine a positional offset of the target object relative to the initial position. The third processor may determine the final position of the target object in the image based on the initial position of the target object in the image and the positional offset of the target object relative to the initial position.

In some optional embodiments, in a case where the electronic device comprises a plurality of processors, the real-time or multiple accurate positioning operations for the target object in the image have a high efficiency, and may be applicable for the scenario of detecting a target object surrounding a mobile carrier (such as a vehicle or the like) when the mobile carrier (such as a vehicle or the like) is in the autonomous driving mode.

In an embodiment, after a plurality of first spatial positional codes are obtained by performing spatial positional encoding on an initial position of the target object in the image, the plurality of first spatial positional codes, a plurality of query vectors corresponding to the plurality of first spatial positional codes, an image feature of the image, and a second positional code that matches the image feature may be processed according to a preset attention mechanism, to obtain an appearance feature and a positional feature of the target object on the image, and thus decoupling of the appearance feature and the positional feature can be achieved. As the appearance feature of the target object on the image can characterize the feature of the appearance size of the target object in the image, the size information of the target object in the image can be determined accurately based on the appearance feature of the target object in the image. Since the positional feature of the target object in the image can characterize the feature of the final spatial position of the target object in the image and the plurality of first spatial positional codes are obtained based on the initial positional codes of the target object in the image, a positional offset relative to the initial position of the target object can be obtained based on the positional feature of the target object and the plurality of spatial positional codes, and the final position of the target can be obtained in conjunction with the initial position of the target object, to precisely position the target in the image.

In some optional embodiments, the identification result obtained by identifying the target object in the image may comprise the size information of the target object and the final position of the target object in the image.

In an optional example, the step S5 may be executed by calling, by the processor, a corresponding instruction stored in the memory, or may be executed by a second processing module run by the processor.

In some optional embodiments of the present disclosure, the first detection model may be trained in the following manner:

A plurality of sample images containing different types of target objects are obtained. Wherein, each sample image has a positional label containing positional information of a target object.

The plurality of sample images are divided into a training set and a test set. The ratio of the number of samples in the training set to the number of samples in the test set may be 9:1, 8:2, and the like.

The sample images in the training set are respectively input into an initial neural network model for model training, and the sample images in the test set are used to test the accuracy of the neural network model for predicting positions of target objects in the sample images. In the process of training a neural network model, the neural network model is used to extract an image feature of a sample image, process the image feature of the sample image, output a predicted position of a target object in the sample image, and update parameters of the neural network model in a reverse propagation manner based on a difference between the predicted position of the target object in the sample image and an accurate position provided in the positional label of the sample image. When the accuracy of the neural network model for predicting the positions of target objects in the sample images reaches a preset accuracy threshold, or when the iterations of the neural network model reaches a preset number of iterations, the training of the neural network model is ended, and then the first detection model is obtained.

In an embodiment, the first detection model for initially positioning a target object in an image may be trained through machine learning based on a plurality of sample images containing different types of target objects, and the final position of the target object may be obtained using the method of identifying a target object in an image according to the embodiments of the present disclosure, which is helpful for accurately determining the target object in the image.

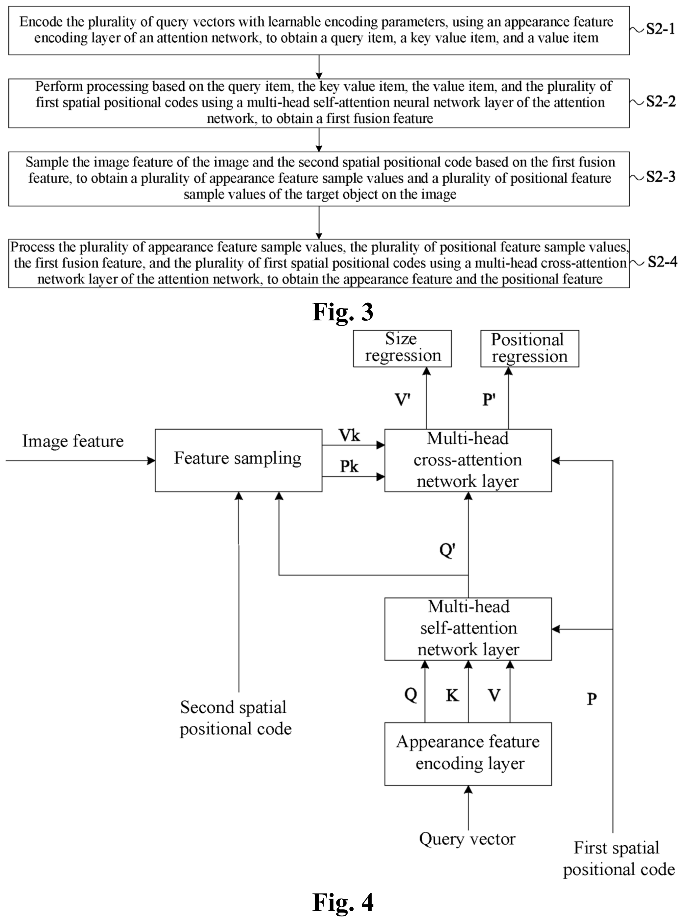

Fig. 3 illustrates a flowchart of the step S2 in some embodiments of the present disclosure. As shown therein, the step S2 may comprise:
S2-1: the plurality of query vectors with learnable encoding parameters are encoded using an appearance feature encoding layer of an attention network, to obtain a query item, a key value item, and a value item.

In some optional embodiments, a network layer for encoding the appearance feature may be arranged in the attention network, which may be defined as an appearance feature encoding layer. The appearance feature encoding layer may encode the plurality of query vectors with learnable encoding parameters, to obtain a query item $Q$, a key value item $K$, and a value item $V$. Wherein, the learnable encoding parameters may be parameters for encoding a plurality of query vectors in the attention network, which may be learnable during the processing of the attention network.

In an optional example, the step S2-1 may be executed by calling, by the processor, a corresponding instruction stored in the memory, or may be executed by a query vector encoding unit run by the processor.

S2-2: processing is performed based on the query item, the key value item, the value item, and the plurality of first spatial positional codes using a multi-head self-attention neural network layer of the attention network, to obtain a first fusion feature.

In some optional embodiments, a self-attention mechanism-based network layer may be arranged in the attention network, which may be defined a multi-head self-attention network layer. Using the query item $Q$, the key value item $K$, the value item $V$, and a first spatial positional code $P$ as multi-head inputs, the self-attention mechanism-based network layer may perform feature fusion processing on the query item $Q$, the key value item $K$, the value item $V$, and the first spatial positional code $P$ from the multi-head inputs, to output a first fusion feature.

In an optional example, the step S2-2 may be executed by calling, by the processor, a corresponding instruction stored in the memory, or may be executed by a multi-head self-attention processing unit run by the processor.

S2-3: the image feature of the image and the second spatial positional code are sampled based on the first fusion feature, to obtain a plurality of appearance feature sample values and a plurality of positional feature sample values of the target object on the image.

In some optional embodiments, a feature sampling module may be arranged in the second detection model, and may perform feature sampling for the image feature of the image and the second spatial positional code based on the first fusion feature, according to a preset feature sampling rule, to correspondingly obtain a plurality of appearance feature sample values and a plurality of positional feature sample values of the target object on the image.

In an optional example, the step S2-3 may be executed by calling, by the processor, a corresponding instruction stored in the memory, or may be executed by a feature sampling unit run by the processor.

S2-4: the plurality of appearance feature sample values, the plurality of positional feature sample values, the first fusion feature, and the plurality of first spatial positional codes are processed using a multi-head cross-attention network layer of the attention network, to obtain the appearance feature and the positional feature.

In some optional embodiments, a network layer for processing a part of inputs from the inside of the attention network and the other part of inputs from the outside of the attention network may be arranged in the attention network, which may be defined as a multi-head cross-attention network layer. The multi-head cross-attention network layer uses the first fusion feature and the plurality of first spatial positional codes inside the attention network as a part of inputs while using the plurality of appearance feature sample values and the plurality of positional feature sample values from the outside of the attention network as the other part of inputs, and process the two parts of inputs as the multi-head inputs, to obtain the appearance feature and the positional feature of the target object on the image.

It is to be noted that the multi-head self-attention network layer in the embodiments of the present disclosure is a network layer that may obtain input information from the inside of the attention network and process the input information. The multi-head cross-attention network layer in the embodiments of the present disclosure is a network layer that may obtain a part of input information (e.g., a plurality of appearance feature sample values and a plurality of positional feature sample values) from the inside of the attention network and the other part of input information (e.g., appearance feature sample values and positional feature sample values) from the outside of the attention network, and may process the input information.

In an optional example, the step S2-4 may be executed by calling, by the processor, a corresponding instruction stored in the memory, or may be executed by a multi-head cross-attention processing unit run by the processor.

Fig. 4 illustrates a diagram of a working principle of the method of identifying a target object in an image in some examples of the present disclosure. As shown therein, the appearance feature encoding layer of the attention network is used to encode a plurality of query vectors from a channel of the image, to obtain a query item $Q$, a key value item $K$, and a value item $V$. The query item $Q$, the key value item $K$, the value item $V$, and the first spatial positional code $P$ act as inputs of the multi-head cross-attention network layer, and the multi-head cross-attention network layer divides each input into h sets (also referred to as h vector heads) at a channel-wise, where h is an integer greater than 0. The multi-head self-attention network layer performs the same preset operation on the h vector heads, to output a first fusion feature $Q'$. Sampling is performed for the image feature of the image based on the first fusion feature $Q'$, according to a preset sampling rule, to obtain a plurality of appearance feature sample values $V_k$ of the target object on the image, and obtain a plurality of positional feature sample values $P_k$ which one-to-one corresponds to the appearance feature sample values $V_k$. In Fig. 4, a feature sampling module is used to perform sampling for the image feature of the image and the second spatial positional code based on the first fusion feature $Q'$, according to the preset sampling rule, thus obtaining a plurality of appearance feature sample values $V_k$, and obtaining, from the second spatial positional code, a plurality of positional feature sample values $P_k$ which one-to-one corresponds to the appearance feature sample values $V_k$. The plurality of appearance feature sample values $V_k$, the plurality of positional feature sample values $P_k$, the first fusion feature $Q'$, and the first spatial positional code $P$ act as inputs of the multi-head cross-attention network layer, and the multi-head cross-attention network layer processes each appearance feature sample value $V_k$, each positional feature sample value $P_k$ corresponding to each appearance feature sample value $V_k$, the first fusion feature $Q'$, and the first spatial positional code $P$, to output an appearance feature $V'$ and a positional feature $P'$ of the target object on the image.

In an embodiment, the attention network is used to process a plurality of first spatial positional codes, a plurality of query vectors corresponding to the plurality of first spatial positional codes, an image feature of the image, and a second positional code that matches the image feature, and an appearance feature and a positional feature of a target object on the image can be quickly and accurately obtained, which is helpful for size regression and positional regression based on the appearance feature and the positional feature, and size information and a positional offset of the target object in the image can be precisely obtained, which facilitates a high-precision positioning of the target object in the image.

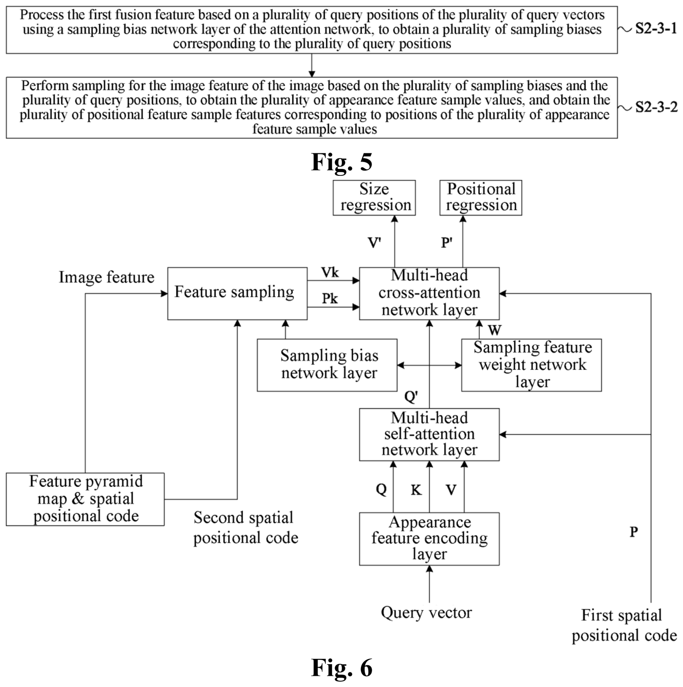

Fig. 5 illustrates a flowchart of the step S2-3 in some embodiments of the present disclosure. As shown therein, the step S2-3 may comprise:

S2-3-1: the first fusion feature is processed based on a plurality of query positions of the plurality of query vectors using a sampling bias network layer of the attention network, to obtain a plurality of sampling biases corresponding to the plurality of query positions.

In some optional embodiments, a network layer for determining a sampling bias may be arranged in the attention network, which may be defined as a sampling bias network layer. After the plurality of query positions of the plurality of query vectors are obtained, the sampling bias network layer processes the first fusion feature based on the plurality of query positions of the plurality of query vectors, and thus may obtain a plurality of sampling biases corresponding to the plurality of query positions.

Fig. 6 illustrates a diagram of a working principle of the method of identifying a target object in an image in some other examples of the present disclosure. As shown therein, the sampling bias network layer generates an $N \times L \times m \times 2$ tensor based on the first fusion feature $Q'$, where the tensor indicates $m$ sampling biases of $N$ query vectors on the $L$ image features. Wherein, $N$ represents the number of query vectors, which represents identical to the number of the plurality of query vectors in the step S2, $L$ represents a number of layers of a feature pyramid map, if any, included in the image feature of the image, and m represents a number of sampling biases, where each of $N, L$ and $m$ is an integer greater than 0. The sampling bias herein is a sampling bias of a sampling point relative to the position of the query vector *per se*.

S2-3-2: sampling for the image feature of the image is performed based on the plurality of sampling biases and the plurality of query positions, to obtain the plurality of appearance feature sample values, and the plurality of positional feature sample features corresponding to positions of the plurality of appearance feature sample values are obtained.

Wherein, a plurality of positional feature sample values corresponding to the plurality of positional feature sample features may be obtained from the second spatial positional code based on a matching relationship between image features and second spatial positional codes.

In some optional embodiments, when the sampling is performed for the appearance feature, features at $m$ positions are sampled respectively in the $L$-layer feature pyramid map, to obtain a plurality of appearance feature sample values $V_k$, and a positional feature sample value $P_k$ corresponding to each appearance feature sample value $V_k$ is obtained.

In an optional example, the steps S2-3-1 and S2-3-2 may be executed by calling, by the processor, a corresponding instruction stored in the memory, or may be executed by a feature sampling unit run by the processor.

In an embodiment, the sampling bias network layer of the attention network is used to process the first fusion feature based on the plurality of query positions corresponding to the plurality of query vectors, to obtain a plurality of sample biases corresponding to the plurality of query positions, and sampling is performed for the image feature of the image and the first spatial positional codes based on the plurality of sampling biases and the plurality of query positions, to perform sampling for the appearance feature and the positional feature, respectively, which is helpful for decoupling of the appearance feature and the positional feature, thus improving the accuracy of positioning the target object in the image.

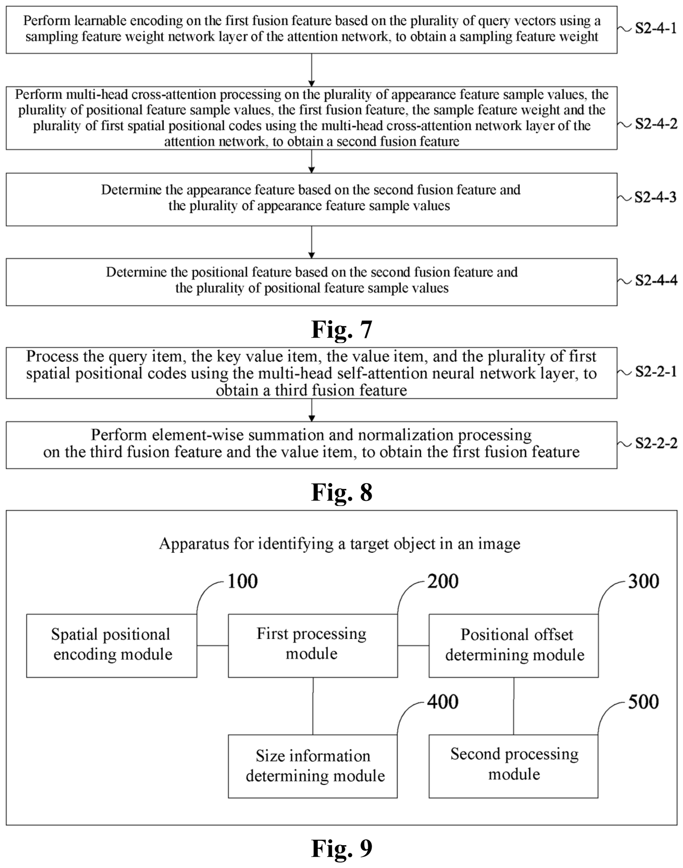

Fig. 7 illustrates a flowchart of the step S2-4 in some embodiments of the present disclosure. As shown therein, the step S2-4 may comprise:

S2-4-1: learnable encoding is performed on the first fusion feature based on the plurality of query vectors using a sampling feature weight network layer of the attention network, to obtain a sampling feature weight.

In some optional embodiments, a network layer for determining a sampling feature weight may be arranged in the attention network, which may be defined as a sampling feature weight network layer. The sampling feature weight network layer of the attention network is used to perform learnable encoding on the first fusion feature $Q'$ based on the plurality of query vectors to generate an $N \times L \times m \times 2$ tensor that indicates a sampling feature weight $W$ of $N$ query vectors at $L \times m$ sampling points. Wherein, the learnable encoding herein is to encode the first fusion feature $Q'$ during the processing of the attention network, and the way of encoding is learnable.

In an optional example, the step S2-4-1 may be executed by calling, by the processor, a corresponding instruction stored in the memory, or may be executed by a sampling feature weight determining unit run by the processor.

S2-4-2: multi-head cross-attention processing is performed on the plurality of appearance feature sample values, the plurality of positional feature sample values, the first fusion feature, the sample feature weight and the plurality of first spatial positional codes using the multi-head cross-attention network layer of the attention network, to obtain a second fusion feature.

In some optional embodiments, the plurality of appearance feature sample values $V_k$, the plurality of positional feature sample values $P_k$, the first fusion feature $Q'$, and the first spatial positional code $P$ act as inputs of the multi-head cross-attention network layer, and the multi-head cross-attention network layer is used for processing to output a second fusion feature $Q''$.

In an optional example, the step S2-4-2 may be executed by calling, by the processor, a corresponding instruction stored in the memory, or may be executed by a multi-head self-attention processing unit run by the processor.

cessor.

S2-4-3: the appearance feature is determined based on the second fusion feature and the plurality of appearance feature sample values.

In some optional embodiments, the plurality of appearance feature sample features $V_k$ are cross-layer linked and normalized based on the second fusion feature $Q''$, to an appearance feature $V'$.

In some optional embodiments, the appearance feature $V'$ may be obtained through the following equation:

$$V' = softmax(W + PP_k^T)V_k$$

wherein, *softmax*() represents normalizing each row of the matrix.

It is to be noted that the equation for determining an appearance feature is provided herein only as an example, and other feasible equations may be selected to determine an appearance feature, in the actual application.

In an optional example, the step S2-4-3 may be executed by calling, by the processor, a corresponding instruction stored in the memory, or may be executed by an appearance feature determining unit run by the processor.

S2-4-4: the positional feature is determined based on the second fusion feature and the plurality of positional feature sample values.

In some optional embodiments, the plurality of positional feature sample features $P_k$ are cross-layer linked and normalized based on the second fusion feature Q'', to obtain a positional feature P'.

In some optional embodiments, the positional feature P' may be obtained through the equation below:

$$P' = softmax(W + PP_k^T)P_k$$

It is to be noted that the equation for determining a positional feature is provided herein only as an example, and other feasible equations may be selected to determine a positional feature, in the actual application.

In an optional example, the step S2-4-4 may be executed by calling, by the processor, a corresponding instruction stored in the memory, or may be executed by a positional feature determining unit run by the processor.

In an embodiment, a sampling feature weight network layer of the attention network is used to process the first fusion feature for a plurality of sampling points corresponding to a plurality of query vectors, to obtain a sampling feature weight, and a multi-head cross-attention network layer of the attention network is used to perform multi-head cross-attention processing on the plurality of appearance feature sample values, the plurality of positional feature sample values, the first fusion feature and the plurality of first spatial positional codes, to obtain a second fusion feature, and an appearance feature and a positional feature which are decoupled may be obtained accurately based on the second fusion feature, the plurality of appearance feature sample values and the plurality of positional feature sample features, which is helpful for improving the positioning precision of the target object in the image.

Fig. 8 illustrates a flowchart of the step S2-2 in some embodiments of the present disclosure. As shown therein, the step S2-2 may comprise:

S2-2-1: the query item, the key value item, the value item, and the plurality of first spatial positional codes are processed using the multi-head self-attention neural network layer, to obtain a third fusion feature.

In some optional examples of the present disclosure, a third fusion feature may be obtained through the following equation, using a multi-head self-attention network of the attention network:

$$Q''' = softmax(\frac{QK^T}{\sqrt{C}} + PP^T)V$$

wherein, $Q'''$ represents the third fusion feature, $Q, K, V$ and $P$ represents a query item, a key value item, a value item and a first spatial positional code, respectively, and $C$ represents a number of channels of the feature V.

It is to be noted that the equation for determining a third fusion feature is provided herein as an example, and other feasible equation may be selected to determine a third fusion feature, in the actual application.

S2-2-2: element-wise summation and normalization processing are performed on the third fusion feature and the value item, to obtain the first fusion feature.

In an optional example, the steps S2-2-1 and S2-2-2 may be executed by calling, by the processor, a corresponding instruction stored in the memory, or may be executed by a multi-head self-attention processing unit run by the processor.

In an embodiment, a multi-head self-attention network layer of the attention network is used to process a query item, a key value item, a value item and a plurality of first spatial positional codes, to obtain a third fusion feature, and element-wise summation and normalization processing are performed on the third fusion feature and the value item, to quickly and accurately obtain the first fusion feature, which is helpful for quickly decoupling the appearance feature and the positional feature, and thus can improve the positioning precision of the target object in the image.

In some embodiments of the present disclosure, the step S2-2-1 may comprise: concatenating the first spatial positional code respectively with the query item and the key value item, to obtain a query concatenation item and a key value concatenation item; and performing similarity computing on the query concatenation item and the key value concatenation item, performing weighted processing on the value item using a result of the similarity computing as a weight, and determining the third fusion feature based on a result of the weighted processing.

In some optional embodiments, the vector of the first spatial positional code $P$ and the vector of the query item $Q$ may be concatenated, to obtain a query concatenation item $[P, Q]$, and the vector of the first spatial positional code $P$ and the vector of the key value item $K$ may be concatenated, to obtain a key value concatenation item $[P, K]$; then, a preset similarity computing equation and a preset weighting equation may be used to perform similarity computing and weighted processing sequentially, to finally obtain a third fusion feature.

In an embodiment, a multi-head self-attention network layer of the attention network may be used to concatenate the first spatial positional code characterizing the positional feature of the target object in the image respectively with the query item and the key value item, to obtain a query concatenation item and a key value concatenation item. Accordingly, similarity computing and weighted processing may be performed on the query concatenation item and the key value concatenation item to finally obtain a third fusion feature, and the appearance feature and the positional feature can be processed separately, which is helpful for decoupling the appearance feature and the positional feature, and thus can improve the positioning precision of the target object in the image.

In some embodiments of the present disclosure, prior to the step S2-3, the method further comprises: determining a feature pyramid map with a preset number of layers corresponding to the image; and determining a spatial positional code that matches an image feature of each layer of the feature pyramid map.

A feature extraction network is used to perform image feature extraction and down-sampling on the image according to a preset image feature extraction rule, to obtain a feature pyramid map with a preset number of layers. For an image feature of each layer of the feature pyramid map with the preset number of layers, a spatial positional code matching therewith is obtained. Wherein, all the spatial positional codes extracted based on the feature extraction pyramid is a second spatial positional code.

In an optional example, the step of determining the feature pyramid map may be executed by calling, by the processor, a corresponding instruction stored in the memory, or may be executed by a feature pyramid map module run by the processor.

In an optional example, the step of determining the spatial positional code matching the image feature of each layer of the feature pyramid map may be executed by calling, by the processor, a corresponding instruction stored in the memory, or may be executed by a spatial positional encoding module run by the processor.

In some examples of the present disclosure, the preset number of layers is 3, and obtaining the feature pyramid map and the spatial positional code that matches the image feature of each layer of the feature pyramid map may comprise:

Performing feature extraction on the image, to obtain a first image feature with dimensions $H \times W \times C$, and obtaining a spatial positional code X with dimensions $H \times W \times C$ that matches the first image feature, where $H$ and $W$ represent respective numbers of pixels respectively corresponding to the width and the height of the first image feature, and $C$ represents the number of channels in the image;

Performing down-sampling for the first image feature, to obtain a second image feature with dimensions $(H/2) \times (W/2) \times (C/2)$, and obtain a spatial positional code Y with dimensions $(H/2) \times (W/2) \times (C/2)$ that matches the second image feature; and

Performing down-sampling for the second image feature, to obtain a third image feature with dimensions $(H/4) \times (W/4) \times (C/4)$, and obtain a spatial positional code Z with dimensions $(H/4) \times (W/4) \times (C/4)$ that matches the third image feature.

In an example, the feature pyramid map of the image comprises: the first image feature with dimensions $H \times W \times C$, the second image feature with dimensions $(H/2) \times (W/2) \times (C/2)$ and the third image feature with dimensions $(H/4) \times (W/4) \times (C/4)$. The second spatial positional code comprises: the spatial positional code X with dimensions $H \times W \times C$, the spatial positional code Y with dimensions $(H/2) \times (W/2) \times (C/2)$ and the spatial positional code Z with dimensions $(H/4) \times (W/4) \times (C/4)$.

In an embodiment, a feature pyramid map with a preset number of layers corresponding to the image may be determined according to a preset image feature extraction rule, and a spatial positional code that matches the image feature of each layer of the feature pyramid map can then be obtained, which is helpful for quickly obtaining an appearance feature sample value and a positional feature sample value, and thus can improve the efficiency of identifying a target object in an image.

Any of the methods of identifying a target object in an image provided by the embodiments of the present disclosure may be executed by any appropriate electronic device with a data processing capability, including, but not limited to, a terminal device, a server or the like. Alternatively, any of the methods of identifying a target object in an image provided by the embodiments of the present disclosure may be executed by the processor, for example, by calling, by the processor, a corresponding instruction stored in the memory. Details will be omitted hereinafter.

It is to be appreciated that: all or a part of the steps for implementing the method embodiments described above may be completed by hardware related to program instructions, wherein the program described above may be stored in a computer readable storage medium, and may perform, when executed, steps of the method embodiments as described above. The storage medium comprises any of various types of media capable of storing program codes, for example, an ROM, an RAM, a magnetic disk, an optical disk and the like.

Example Apparatus

Fig. 9 illustrates a schematic diagram of a structure of an apparatus for identifying a target object in an image in some example embodiments of the present disclosure. As shown therein, the apparatus comprises:

a spatial positional encoding module 100 for performing spatial positional encoding on an initial position of the target object in the image, to obtain a plurality of first spatial positional codes;

a first processing module 200 for processing the plurality of first spatial positional codes, a plurality of query vectors corresponding to the plurality of first spatial positional codes, an image feature of the image, and a second positional code that matches the image feature, to obtain an appearance feature and a positional feature of the target object on the image, wherein the query vector is a vector for a query when detecting a target object in an image;

a positional offset determining module 300 for determining, based on the positional feature and the plurality of first spatial positional codes, a positional offset of the target object relative to the initial position;

a size information determining module 400 for determining, based on the appearance feature, size information of the target object in the image; and

a second processing module 500 for determining, based on the initial position and the positional offset of the target object, a final position of the target object in the image.

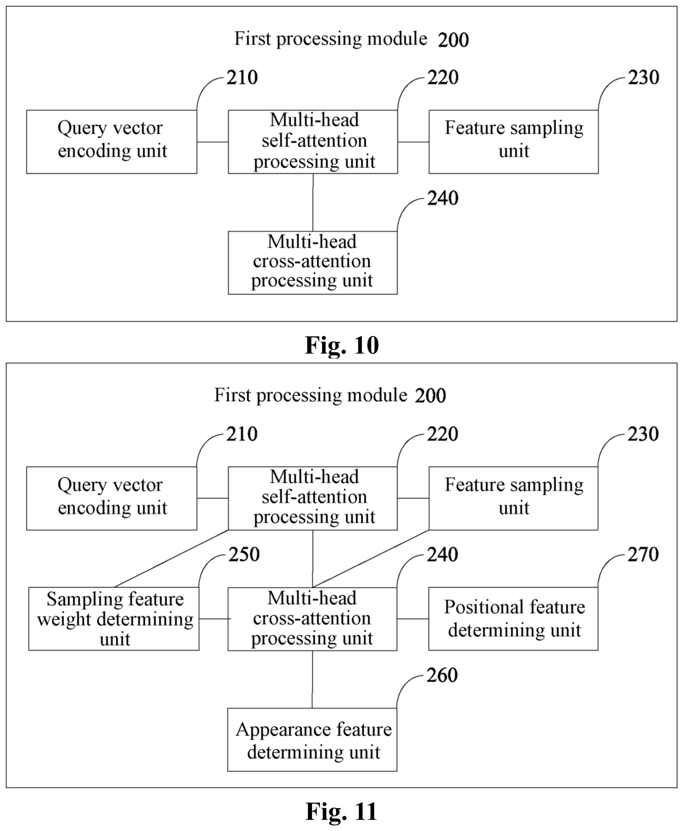

Fig. 10 illustrates a block diagram of a structure of the first processing module 200 in some embodiments of the present disclosure. As shown therein, the first processing module 200 comprises:

a query vector encoding unit 210 for encoding the plurality of query vectors with learnable encoding parameters, using an appearance feature encoding layer in an attention network, to obtain a query item, a key value item, and a value item;

a multi-head self-attention processing unit 220 for performing processing based on the query item, the key value item, the value item, and the plurality of first spatial positional codes using a multi-head self-attention neural network layer of the attention network, to obtain a first fusion feature;

a feature sampling unit 230 for sampling the image feature of the image and the second spatial positional code based on the first fusion feature, to obtain a plurality of appearance feature sample values and a plurality of positional feature sample values of the target object on the image; and

a multi-head cross-attention processing unit 240 for processing the plurality of appearance feature sample values, the plurality of positional feature sample values, the first fusion feature, and the plurality of first spatial positional codes using a multi-head cross-attention network layer of the attention network, to obtain the appearance feature and the positional feature.

In some embodiments of the present disclosure, the feature sampling processing unit 230 is used for processing the first fusion feature based on a plurality of query positions of the plurality of query vectors through a sampling bias network layer of the attention network, to obtain a plurality of sampling biases corresponding to the plurality of query positions; and the feature sampling unit 230 is further used for performing sampling for the image feature of the image based on the plurality of sampling biases and the plurality of query positions, to obtain the plurality of appearance feature sample values, and obtaining the plurality of positional feature sample features corresponding to positions of the plurality of appearance feature sample values.

Fig. 11 illustrates a block diagram of the first processing module 200 in some other embodiments of the present disclosure. As shown therein, the first processing module 200 further comprises:

a sampling feature weight determining unit 250 for performing learnable encoding on the first fusion feature based on the plurality of query vectors using a sampling feature weight network layer of the attention network, to obtain a sampling feature weight;

an appearance feature determining unit 260 for determining the appearance feature based on the second fusion feature and the plurality of appearance feature sample values; and

a positional feature determining unit 270 for determining the positional feature based on the second fusion feature and the plurality of positional feature sample values.

Wherein, the multi-head self-attention processing unit 220 is used for performing multi-head cross-attention processing on the plurality of appearance feature sample values, the plurality of positional feature sample values, the first fusion feature, the sample feature weight and the plurality of first spatial positional codes using the multi-head cross-attention network layer of the attention network, to obtain a second fusion feature.

In some embodiments of the present disclosure, the multi-head self-attention processing unit 220 is used for processing the query item, the key value item, the value item, and the plurality of first spatial positional codes using the multi-head self-attention neural network layer, to obtain a third fusion feature; and multi-head self-attention processing unit 220 is used for performing element-wise summation and normalization processing on the third fusion feature and the value item, to obtain the first fusion feature.

In some embodiments of the present disclosure, the multi-head self-attention processing unit 220 is used for concatenating the first spatial positional code respectively with the query item and the key value item, to obtain a query concatenation item and a key value concatenation item; and the multi-head self-attention processing unit 220 is used for performing similarity computing on the query concatenation item and the key value concatenation item, performing weighted processing on the value item using a result of the similarity computing as a weight, and determining the third fusion feature based on a result of the weighted processing.

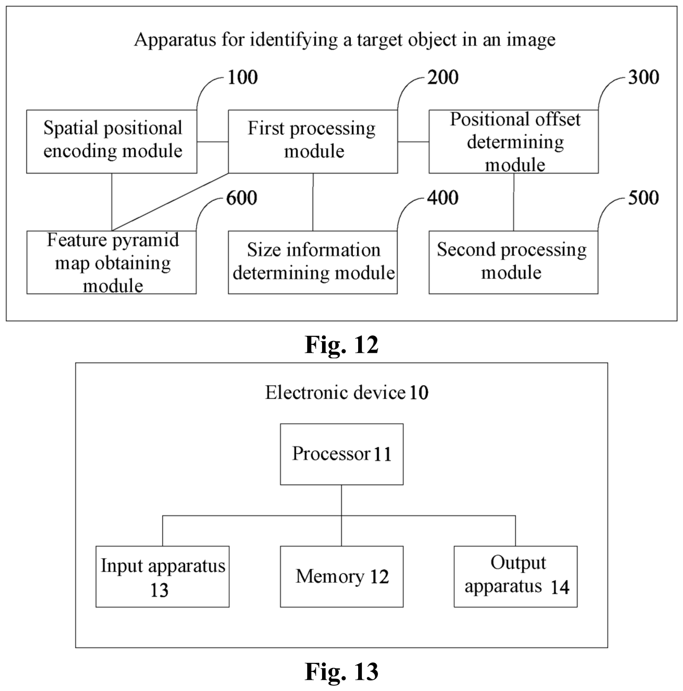

Fig. 12 illustrates a block diagram of an apparatus for identifying a target object in an image in some other embodiments of the present disclosure. As shown therein, the apparatus identifying a target object in an image further comprises:

A feature pyramid map obtaining module 600 for determining a feature pyramid map with a preset number of layers corresponding to the image based on a preset image feature extraction rule;

wherein the spatial positional encoding module 100 is used for determining a second spatial positional code that matches an image feature of each layer of the feature pyramid map.

It is to be noted that the specific implementations of the apparatus for identifying a target object in an image according to embodiments of the present disclosure are similar to those of the method of identifying a target object in an image according to the embodiments of the present disclosure. For details, reference is made to the section about the method of identifying a target object in an image, which will be omitted here to avoid redundancy.

Example Electronic Device

Fig. 13 illustrates a diagram of a structure of an electronic device provided by embodiments of the present disclosure, which comprises at least one processor 11 and a memory 12.

The processor 11 may be a Central Processing Unit (CPU) or other form of processing unit with a data processing capability and/or an instruction execution capability, and may control other components in the electronic device 10 to perform a desired function.

The memory 12 may comprise one or more computer program products that may comprise various forms of computer readable storage media, for example, a volatile memory and/or a non-volatile memory. The volatile memory may comprise, for example, a Random Access Memory (RAM) and/or a cache, and the like. The non-volatile memory may include, for example, a Read-Only Memory (ROM), a hard disk, a flash memory, and the like. The computer readable storage medium may have one or more computer program instructions stored thereon, and the processor 11 may run the one or more computer program instructions to implement the method of identifying a target object in an image and/or other desired functions described above in the various embodiments of the present disclosure.

In an example, the electronic device 10 may comprise: an input apparatus 13 and an output apparatus 14, wherein the components are interconnected via a bus system and/or a connection mechanism in other form (not shown).

The input apparatus 13 may further comprise, for example, a keyboard, a mouse, and the like.

The output apparatus 14 may output various types of information to the outside, which may comprise, for example, a display, a speaker, a printer, a communication network and remote output apparatus connected therewith, and the like.

For simplicity, Fig. 13 only shows some components related to the present disclosure in the electronic device 10, and omits therefrom components such as a bus, an input/output interface, and the like. In addition, according to the specific application, the electronic device 10 may further comprise any other appropriate components.

Example computer program product and computer readable storage medium

In addition to the methods and apparatus described above, the embodiments of the present disclosure further provide a computer program product comprising computer program instructions, wherein the computer program instructions, when run by the processor, cause the processor to execute steps of the method of identifying a target object in an image according to the various embodiments of the present disclosure described above in the "Example Method" section.

Computer program code for performing operations of the present disclosure may be written by using one or more program design language or any combination. The program design language includes, but is not limited to, object oriented program design language such as Java, C++, and the like, and further includes conventional process-type program design language such as "C" or similar program design language. The program code may be completely or partially executed on a user computer, performed as an independent software packet, partially executed on the user computer and partially executed on a remote computer, or completely executed on the remote computer or a server.

Moreover, the embodiments of the present disclosure may further relate to a computer readable storage medium having computer program instructions stored thereon, wherein the computer program instructions, when run by the processor, cause the processor to execute steps of the method of identifying a target object in an image according to the various embodiments of the present disclosure described above in the "Example Method" section.

The computer readable storage medium may be a readable medium or any combination of a plurality of readable media. The readable medium may be a readable signal medium or a readable storage medium. A readable medium may include, but is not limited to, an electronic, magnetic, optical, electromagnetic, infrared, or semiconductor system, apparatus, or device, or any suitable combination of the foregoing. More specific examples of a computer-readable storage medium would include an electrical connection based on one or more wires, a portable computer diskette, a hard disk, a Random Access Memory (RAM), a Read-Only Memory (ROM), an Erasable Programmable Read-Only Memory (EPROM or flash memory), an optical fiber, a Compact Disc Read-Only memory (CD-ROM), an optical storage device, a magnetic storage device, or any suitable combination of the foregoing.

Although the basic principles of the present disclosure have been described above with reference to the specific embodiments, the advantages, benefits, effects and the like are merely mentioned herein as examples, without limitations, which should not be construed as essentials of each embodiment of the present disclosure. In addition, the details disclosed above are provided only for illustration and ease of understanding, rather than limitation, which do not require that the present disclosure be implemented with those details.

Those skilled in the art may make various modifications and variations to the present disclosure without departing from the spirits and scope described herein. Therefore, if the modifications and variations thereto fall within the scope defined by the claims of the present disclosure and the equivalents thereof, the present disclosure is also intended to cover those modifications and variations.

**Claims**

1. A method of identifying a target object in an image, comprising:

   performing spatial positional encoding on an initial position of the target object in the image, to obtain a plurality of first spatial positional codes;

processing the plurality of first spatial positional codes, a plurality of query vectors corresponding to the plurality of first spatial positional codes, an image feature of the image, and a second positional code that matches the image feature, to obtain an appearance feature and a positional feature of the target object on the image;

determining, based on the positional feature and the plurality of first spatial positional codes, a positional offset of the target object relative to the initial position;

determining, based on the appearance feature, size information of the target object in the image; and

determining, based on the initial position and the positional offset of the target object, a final position of the target object in the image.

2. The method of claim 1, wherein processing the plurality of first spatial positional codes, the plurality of query vectors corresponding to the plurality of first spatial positional codes, the image feature of the image, and the second positional code that matches the image feature, to obtain the appearance feature and the positional feature of the target object on the image, comprises:

encoding the plurality of query vectors with learnable encoding parameters, using an appearance feature encoding layer of an attention network, to obtain a query item, a key value item, and a value item;

performing processing based on the query item, the key value item, the value item, and the plurality of first spatial positional codes using a multi-head self-attention neural network layer of the attention network, to obtain a first fusion feature;

sampling the image feature of the image and the second spatial positional code based on the first fusion feature, to obtain a plurality of appearance feature sample values and a plurality of positional feature sample values of the target object on the image; and

processing the plurality of appearance feature sample values, the plurality of positional feature sample values, the first fusion feature, and the plurality of first spatial positional codes using a multi-head cross-attention network layer of the attention network, to obtain the appearance feature and the positional feature.

3. The method of claim 2, wherein sampling the image feature of the image and the second spatial positional code based on the first fusion feature, to obtain the plurality of appearance feature sample values

and the plurality of positional feature sample values of the target object on the image, comprises:

processing the first fusion feature based on a plurality of query positions of the plurality of query vectors using a sampling bias network layer of the attention network, to obtain a plurality of sampling biases corresponding to the plurality of query positions; and

performing sampling for the image feature of the image based on the plurality of sampling biases and the plurality of query positions, to obtain the plurality of appearance feature sample values, and obtaining the plurality of positional feature sample features corresponding to positions of the plurality of appearance feature sample values.

4. The method of claim 2, wherein processing the plurality of appearance feature sample values, the plurality of positional feature sample values, the first fusion feature, and the plurality of first spatial positional codes using the multi-head cross-attention network layer of the attention network, to obtain the appearance feature and the positional feature, comprises:

performing learnable encoding on the first fusion feature based on the plurality of query vectors using a sampling feature weight network layer of the attention network, to obtain a sampling feature weight;

performing multi-head cross-attention processing on the plurality of appearance feature sample values, the plurality of positional feature sample values, the first fusion feature, the sample feature weight and the plurality of first spatial positional codes using the multi-head cross-attention network layer of the attention network, to obtain a second fusion feature;

determining the appearance feature based on the second fusion feature and the plurality of appearance feature sample values; and

determining the positional feature based on the second fusion feature and the plurality of positional feature sample values.

5. The method of any one of claims 2-4, wherein performing the processing based on the query item, the key value item, the value item, and the plurality of first spatial positional codes using the multi-head self-attention neural network layer of the attention network, to obtain the first fusion feature, comprises:

processing the query item, the key value item, the value item, and the plurality of first spatial positional codes using the multi-head self-attention neural network layer, to obtain a third fusion feature; and

performing element-wise summation and normalization processing on the third fusion feature and the value item, to obtain the first fusion feature.

6. The method of claim 5, wherein processing the query item, the key value item, the value item, and the plurality of first spatial positional codes using the multi-head self-attention neural network layer, to obtain the third fusion feature, comprises:

concatenating the first spatial positional code respectively with the query item and the key value item, to obtain a query concatenation item and a key value concatenation item; and performing similarity computing on the query concatenation item and the key value concatenation item, performing weighted processing on the value item using a result of the similarity computing as a weight, and determining the third fusion feature based on a result of the weighted processing.

7. The method of any of claims 2-4, wherein prior to sampling the image feature of the image and the second spatial positional code based on the first fusion feature, to obtain the plurality of appearance feature sample values and the plurality of positional feature sample values of the target object on the image, the method further comprises:

determining, based on a preset image feature extraction rule, a feature pyramid map with a preset number of layers corresponding to the image; and determining a second spatial positional code that matches an image feature of each layer of the feature pyramid map.

8. An apparatus of identifying a target object in an image, comprising:

a spatial positional encoding module for performing spatial positional encoding on an initial position of the target object in the image, to obtain a plurality of first spatial positional codes; a first processing module for processing the plurality of first spatial positional codes, a plurality of query vectors corresponding to the plurality of first spatial positional codes, an image feature of the image, and a second positional code that matches the image feature, to obtain an appearance feature and a positional feature of the target object on the image; a positional offset determining module for determining, based on the positional feature and the plurality of first spatial positional codes, a positional offset of the target object relative to the initial position;
a size information determining module for determining, based on the appearance feature, size information of the target object in the image; and
a second processing module for determining, based on the initial position and the positional offset of the target object, a final position of the target object in the image.

9. A computer readable storage medium storing a computer program thereon, wherein the computer program is used for performing the method of any of claims 1-7.

10. An electronic device, comprising:

a processor; and
a memory for storing executable instructions by the processor;
wherein the processor is used for reading the executable instructions from the memory, and executing the instructions to implement the method of any of claims 1-7.

1

2

| Image obtaining apparatus | Electronic device |

**Fig. 1**

| Perform spatial positional encoding on an initial position of the target object in the image, to obtain a plurality of first spatial positional codes | ∼S1 |

↓

| Process the plurality of first spatial positional codes, a plurality of query vectors corresponding to the plurality of first spatial positional codes, an image feature of the image, and a second positional code that matches the image feature, to obtain an appearance feature and a positional feature of the target object on the image | ∼S2 |

↓

| Determine, based on the positional feature and the plurality of first spatial positional codes, a positional offset of the target object relative to the initial position | ∼S3 |

↓

| Determine, based on the appearance feature, size information of the target object in the image | ∼S4 |

↓

| Determine, based on the initial position and the positional offset of the target object, a final position of the target object in the image | ∼S5 |

**Fig. 2**

| Encode the plurality of query vectors with learnable encoding parameters, using an appearance feature encoding layer of an attention network, to obtain a query item, a key value item, and a value item | ∼S2-1 |

| Perform processing based on the query item, the key value item, the value item, and the plurality of first spatial positional codes using a multi-head self-attention neural network layer of the attention network, to obtain a first fusion feature | ∼S2-2 |

| Sample the image feature of the image and the second spatial positional code based on the first fusion feature, to obtain a plurality of appearance feature sample values and a plurality of positional feature sample values of the target object on the image | ∼S2-3 |

| Process the plurality of appearance feature sample values, the plurality of positional feature sample values, the first fusion feature, and the plurality of first spatial positional codes using a multi-head cross-attention network layer of the attention network, to obtain the appearance feature and the positional feature | ∼S2-4 |

**Fig. 3**

**Fig. 4**

| Process the first fusion feature based on a plurality of query positions of the plurality of query vectors using a sampling bias network layer of the attention network, to obtain a plurality of sampling biases corresponding to the plurality of query positions | ∽ S2-3-1 |
|---|---|

| Perform sampling for the image feature of the image based on the plurality of sampling biases and the plurality of query positions, to obtain the plurality of appearance feature sample values, and obtain the plurality of positional feature sample features corresponding to positions of the plurality of appearance feature sample values | ∽ S2-3-2 |

**Fig. 5**

**Fig. 6**

| Perform learnable encoding on the first fusion feature based on the plurality of query vectors using a sampling feature weight network layer of the attention network, to obtain a sampling feature weight | ～ S2-4-1 |

| Perform multi-head cross-attention processing on the plurality of appearance feature sample values, the plurality of positional feature sample values, the first fusion feature, the sample feature weight and the plurality of first spatial positional codes using the multi-head cross-attention network layer of the attention network, to obtain a second fusion feature | ～ S2-4-2 |

| Determine the appearance feature based on the second fusion feature and the plurality of appearance feature sample values | ～ S2-4-3 |

| Determine the positional feature based on the second fusion feature and the plurality of positional feature sample values | ～ S2-4-4 |

## Fig. 7

| Process the query item, the key value item, the value item, and the plurality of first spatial positional codes using the multi-head self-attention neural network layer, to obtain a third fusion feature | ～ S2-2-1 |

| Perform element-wise summation and normalization processing on the third fusion feature and the value item, to obtain the first fusion feature | ～ S2-2-2 |

## Fig. 8

Apparatus for identifying a target object in an image

- Spatial positional encoding module ⌐ 100
- First processing module ⌐ 200
- Positional offset determining module ⌐ 300
- Size information determining module ⌐ 400
- Second processing module ⌐ 500

## Fig. 9

First processing module 200

210

Query vector encoding unit

220

Multi-head self-attention processing unit

230

Feature sampling unit

240

Multi-head cross-attention processing unit

**Fig. 10**

First processing module 200

210

Query vector encoding unit

220

Multi-head self-attention processing unit

230

Feature sampling unit

250

Sampling feature weight determining unit

240

Multi-head cross-attention processing unit

270

Positional feature determining unit

260

Appearance feature determining unit

**Fig. 11**

Apparatus for identifying a target object in an image

100 — Spatial positional encoding module

200 — First processing module

300 — Positional offset determining module

600 — Feature pyramid map obtaining module

400 — Size information determining module

500 — Second processing module

**Fig. 12**

Electronic device 10

Processor 11

Input apparatus 13

Memory 12

Output apparatus 14

**Fig. 13**

## INTERNATIONAL SEARCH REPORT

| International application No. |
| --- |
| **PCT/CN2025/088747** |

**A. CLASSIFICATION OF SUBJECT MATTER**

G06V 10/25(2022.01)i

According to International Patent Classification (IPC) or to both national classification and IPC

**B. FIELDS SEARCHED**

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 图像, 特征, 位置, 编码, 查询向量, 解耦, 偏移, image, feature, location, encoding, query, decoup+, offset

**C. DOCUMENTS CONSIDERED TO BE RELEVANT**

| Category* | Citation of document, with indication, where appropriate, of the relevant passages | Relevant to claim No. |
| --- | --- | --- |
| PX | CN 118247490 A (BEIJING HORIZON INFORMATION TECHNOLOGY CO., LTD.) 25 June 2024 (2024-06-25) <br> claims 1-10 | 1-10 |
| Y | CN 116758277 A (LENOVO (BEIJING) CO., LTD.) 15 September 2023 (2023-09-15) <br> description, paragraphs 65-139 | 1-10 |
| Y | CN 117743617 A (BEIJING BAIDU NETCOM SCIENCE AND TECHNOLOGY CO., LTD.) 22 March 2024 (2024-03-22) <br> description, paragraphs 45-94 | 1-10 |
| A | CN 113537350 A (SENSETIME GROUP LIMITED; CENTRE FOR PERCEPTUAL AND INTERACTIVE INTELLIGENCE (CPII) LIMITED) 22 October 2021 (2021-10-22) <br> entire document | 1-10 |
| A | CN 115880555 A (BEIJING BAIDU NETCOM SCIENCE AND TECHNOLOGY CO., LTD.) 31 March 2023 (2023-03-31) <br> entire document | 1-10 |

☑ Further documents are listed in the continuation of Box C.    ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **24 June 2025** | **02 July 2025** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2025/088747**

| C. | DOCUMENTS CONSIDERED TO BE RELEVANT | |
|---|---|---|
| Category* | Citation of document, with indication, where appropriate, of the relevant passages | Relevant to claim No. |
| A | US 2022222914 A1 (TATA CONSULTANCY SERVICES LIMITED) 14 July 2022 (2022-07-14) entire document | 1-10 |

Form PCT/ISA/210 (second sheet) (July 2022)

**INTERNATIONAL SEARCH REPORT**
Information on patent family members

International application No.

**PCT/CN2025/088747**

| Patent document cited in search report | | | Publication date (day/month/year) | Patent family member(s) | | | Publication date (day/month/year) |
|---|---|---|---|---|---|---|---|
| CN | 118247490 | A | 25 June 2024 | None | | | |
| CN | 116758277 | A | 15 September 2023 | None | | | |
| CN | 117743617 | A | 22 March 2024 | None | | | |
| CN | 113537350 | A | 22 October 2021 | None | | | |
| CN | 115880555 | A | 31 March 2023 | None | | | |
| US | 2022222914 | A1 | 14 July 2022 | EP | 4033403 | A1 | 27 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   CN 202410452568